# EUROPÄISCHE PATENTSCHRIFT

(11) **EP 1 215 850 B1**
(45) Veröffentlichungstag und Bekanntmachung des Hinweises auf die Patenterteilung: **01.02.2006**
(21) Anmeldenummer: 01127998.1
(22) Anmeldetag: 24.11.2001
(51) Int. Cl.: H04L 12/40, H04L 12/42, H04B 1/20, B60R 16/02

(54) **Verfahren zur Datenübertragung**
Method of data transmission
Procédé de transmission de données

(30) Priorität: 18.12.2000 DE 10063126
(43) Veröffentlichungstag der Anmeldung: 19.06.2002
(73) Patentinhaber: BECKER GmbH, D-76307 Karlsbad (DE)
(72) Erfinder: Becker, Michael, 76661 Philippsburg (DE); Wietzke, Joachim, 76228 Karlsruhe (DE); Schöpp, Harald, 76275 Ettlingen (DE)
(74) Vertreter: Patentanwälte Westphal, Mussgnug & Partner

(56) Entgegenhaltungen:
- GB-A- 2 276 796
- US-A- 4 935 924
- US-A- 5 907 554
- HECK P ET AL: "MEDIA ORIENTED SYNCHRONOUS TRANSFER - A NETWORK PROTOCOL FOR HIGH QUALITY, LOW COST TRANSFER OF SYNCHRONOUS, ASYNCHRONOUS, AND CONTROL DATA ON FIBER OPTIC" PREPRINTS OF PAPERS PRESENTED AT THE AES CONVENTION, XX, XX, Bd. 4551, Nr. 4551, September 1997 (1997-09), Seiten 1-10,5PAGES, XP001121596

## Beschreibung

Die Erfindung betrifft ein Verfahren zur Datenübertragung mit mehreren Datenkanälen in einem Netzwerk, das mehrere Einheiten miteinander verbindet, die als Datenquelle, Datensenke oder Transceiver dienen, wobei ein zwischen einer als erste Datenquelle aktiven Einheit und einer als erste Datensenke aktiven Einheit Liegenden Verbindungsabschnitten (V1-V3) zugeordneter Kanal (K1) anderen noch nicht mit diesem Kanal belegten Verbindungsabschnitten zugeordnet wird, um einen Kanal (K1) mehrfach nutzen zu können. Ein derartiges verfahren ist beispielsweise aus der US 5 907 554 bekannt.

Mit dem neuesten Stand der Technik ausgestattete Kraftfahrzeuge, wie z. B. Pkw, Lkw oder Omnibusse, sind mit einer Multimediaanlage ausgerüstet, die z. B. aus einem sogenannten ringförmigen MOST-Netzwerk aufgebaut ist, das mehrere Einheiten miteinander vernetzt, die je nach Bedarf als Datenquelle, Datensenke oder als Transceiver fungieren. Ringförmige Netzwerke sind beispielsweise aus der GB 2 276 796 A und dem Artikel "Media Oriented Synchronous Transfer - A Network Protokol for High Quality, Low Cost Transfer of Synchronous, Asynchronous, and Control Data on Fiber Optic", P. Heck et al., Preprints of Papers Presented at the AES Convention, September 1997, Bd. 4551, Nr. 4551, Seiten 1-10 bekannt. Spezifische Signalverteilungsverfahren in Netzwerken sind darüber hinaus in der US 4 935 924 beschrieben.

So kann ein MOST-Netzwerk in einem Kfz beispielsweise einen Rundfunkempfänger, einen Fernsehempfänger, Bildschirme, einen CD-Spieler, einen DVD- oder CD-Wechsler, einen Cassettenrecorder, aktive Lautsprecher, eine Navigationsanlage, ein Autotelefon, ein schnurloses Telefon sowie Bedien- und Steuereinheiten miteinander vernetzen, um nur einige Beispiele für die Einheiten zu nennen.

Je mehr Einheiten untereinander vernetzt sind, desto mehr Datenkanäle sind für die Datenübertragung erforderlich. Die Anzahl der Datenkanäle ist aber aus technischen Gründen begrenzt.

Es ist daher Aufgabe der Erfindung, bei einem zahlreiche Einheiten verbindenden Netzwerk die nur in beschränkter Anzahl zur Datenübertragung zur Verfügung stehenden Datenkanäle optimal zu nutzen.

Die Erfindung löst diese Aufgabe mit den im Anspruch 1 angegebenen Merkmalen dadurch, dass die zwischen einer als zweite Datenquelle aktiven Einheit und einer als zugehörige zweite Datensenke aktiven Einheit liegenden unterschiedlichen Verbindungsabschnitte gleichzeitig mit dem selben Kanal belegt sind.

Nach dem erfindungsgemäßen Verfahren wird zum Aufbau einer neuen Verbindung zwischen zwei Einheiten nicht zwangsläufig ein neuer Datenkanal bestimmt; vielmehr wird der neuen Verbindung ein bereits einem anderen Verbindungsabschnitt zugeordneter Datenkanal zugeordnet. Es sind daher Mehrfachzuordnungen und -belegungen eines Kanals vorgesehen, die eine optimale Ausnutzung der in begrenzter Anzahl vorhandenen Datenkanäle und somit eine optimierte Übertragungskapazität bewirken.

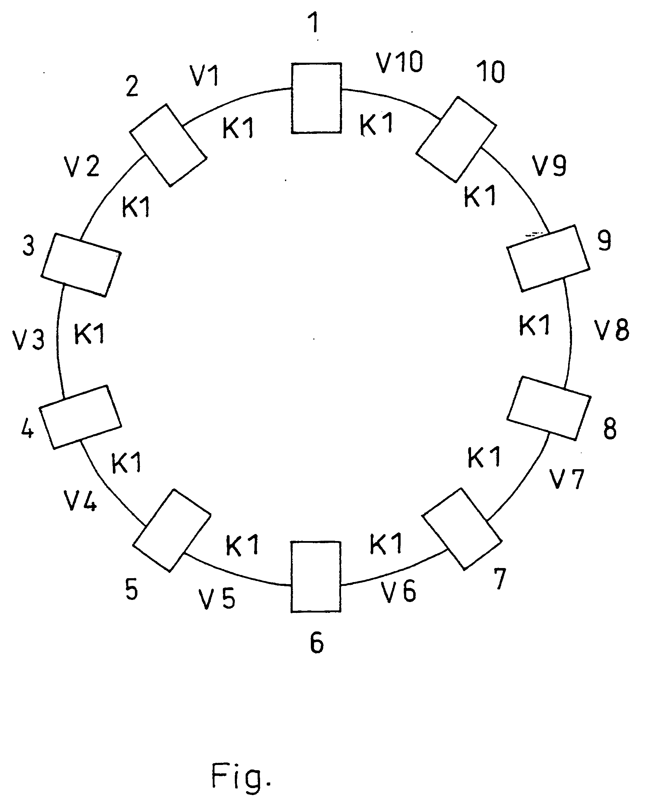

Das erfindungsgemäße Verfahren wird anhand der Figur näher beschrieben und erläutert.

In der Figur ist ein ringförmiges Netzwerk, z. B. ein MOST-Netzwerk gezeigt, das zehn Einheiten 1-10 miteinander vernetzt. Die einzelnen Verbindungsabschnitte V1-V10 zwischen den einzelnen Einheiten 1-10 können z. B. aus Koaxialkabel oder aus Lichtleitern aufgebaut sein.

Es sei nun beispielsweise angenommen, dass die Einheit 1, ein DVD-Spieler, Daten zur Einheit 4, einem im Fond des Fahrzeugs angeordneten Bildschirm überträgt. Gleichzeitig sendet die Einheit 6, beispielsweise ein im Kofferraum des Fahrzeuges angeordneter DVD-Wechsler, Videodaten zur Einheit 9, einem im Armaturenbrett angeordneten Bildschirm.

Die vom DVD-Spieler 1, der als Datenquelle aktiv ist, gesendeten Daten werden durch die Einheiten 2, 3 und 4 geschleift, die als Transceiver wirken, und vom Bildschirm 4, der Datensenke, empfangen und wiedergegeben. Für diese Datenübertragung ist der Datenkanal K1 vorgesehen. Der zwischen den Einheiten 1 und 2 liegende Verbindungsabschnitt V1, der zwischen den Einheiten 2 und 3 liegende Verbindungsabschnitt V2 und der zwischen den Einheiten 3 und 4 liegende Verbindungsabschnitt V3 sind daher mit dem Kanal K1 belegt.

Die vom DVD-Wechsler 6 - einer weiteren Datenquelle - gesendeten Daten werden von den als Transceiver arbeitenden Einheiten 7 und 8 zur zugehörenden Datensenke, dem Bildschirm 9, weitergeleitet. Das erfindungsgemäße Verfahren sieht nun vor, die Verbindungsabschnitte V6, V7 und V8, die von dem DVD-Wechsler 6 zum Bildschirm 9 führen, ebenfalls mit dem gleichen Kanal K1 zu belegen.

Bei Bedarf können die noch freien Verbindungsabschnitte V4 und V5 sowie V9 und V10 ebenfalls mit dem Kanal K1 belegt werden, wenn die Einheiten 4 bzw. 9 als Datenquellen und die Einheiten 5 oder 6 bzw. 10 oder 1 als Datensenken vorgesehen sind. Durch diese Maßnahme werden die in begrenzter Anzahl zur Verfügung stehenden Datenkanäle optimal genutzt, so dass eine Optimierung der Übertragungskapazität erzielt wird.

Ein Vorteil des erfindungsgemäßen Verfahrens zeigt sich darin, dass die Belegung der einzelnen Verbindungsabschnitte mit Kanälen beliebig ist, so dass eine auf den jeweiligen Übertragungsfall und Betriebszustand optimal angepasste Belegung der Verbindungsabschnitte mit Kanälen erzielt wird.

Das erfindungsgemäße Verfahren ist jedoch keineswegs auf ein ringförmiges Netzwerk mit vorgegebener Übertragungsrichtung, z. B. nur im Uhrzeiger- oder nur im Gegenuhrzeigersinn, wie beim MOST-Netzwerk beschränkt. Es ist für jedes Netzwerk unabhängig von seiner Struktur und einer vorgegebenen Übertragungsrichtung geeignet. So können z. B. in einem ringförmigen Netzwerk Daten gleichzeitig im Uhrzeigersinn und entgegen dem Uhrzeigersinn übertragen werden.

### Bezugszeichenliste

- 1: Einheit, DVD-Spieler
- 2: Einheit, Transceiver
- 3: Einheit, Transceiver
- 4: Einheit, Bildschirm
- 5: Einheit
- 6: Einheit, DVD-Wechsler
- 7: Einheit, Transceiver
- 8: Einheit, Transceiver
- 9: Einheit, Bildschirm
- 10: Einheit
- K1: Kanal
- V1 - V10: Verbindungsabschnitt

## Patentansprüche

1. Verfahren zur Datenübertragung mittels mehrerer Datenkanäle in einem ringförmigen Netzwerk, das mehrere Einheiten (1-10) miteinander verbindet, die als Datenquelle, Datensenke oder Transceiver aktiv sind,
wobei ein zwischen einer als ersten Datenquelle aktiven Einheit (1) und einer als erste Datensenke aktiven Einheit (4) liegenden Verbindungsabschnitten (V1-V3) zugeordneter Kanal (K1) anderen noch nicht mit diesem Kanal belegten Verbindungsabschnitten zugeordnet wird, um einen Kanal (K) mehrfach nutzen zu können, **dadurch gekennzeichnet, dass** die zwischen einer als zweite Datenquelle aktiven Einheit (6) und einer als zugehörige zweite Datensenke aktiven Einheit (9) liegenden unterschiedlichen Verbindungsabschnitte (V6, V7, V8) gleichzeitig mit dem selben Kanal (K1) belegt sind.

2. Verfahren nach Anspruch 1,
**dadurch gekennzeichnet, dass** es sich bei dem Netzwerk um ein sogenanntes MOST-Netzwerk handelt.

3. Verfahren nach Anspruch 1 oder 2,
**dadurch gekennzeichnet, dass** die Datenübertragung nur in eine Richtung - entweder im Uhrzeigersinn oder entgegen dem Uhrzeigersinn - erfolgt.

## Claims

1. Method of data transmission by means of a plurality of data channels in a ring network which interconnects a plurality of units (1 to 10) which act as data source, data sink or transceiver, wherein a channel (K1) assigned to connection segments (V1 to V3) lying between a unit (1) acting as a first data source and a unit (4) acting as a first data sink is assigned to other connection segments not including this channel in order to be able to use one channel (K) a number of times, **characterised in that** the different connection segments (V6, V7, V8) lying between a unit (6) acting as a second data source and a unit (9) acting as a second data sink simultaneously include the same channel (K1).

2. Method as claimed in Claim 1, **characterised in that** the network is a so-called MOST network.

3. Method as claimed in Claim 1 or 2, **characterised in that** the data transmission takes place only in one direction - either clockwise or anticlockwise.

## Revendications

1. Procédé de transmission de données au moyens de plusieurs canaux de données dans un réseau annulaire, qui relie ensemble plusieurs unités (1-10) qui sont actives en tant que sources de données, collecteurs de données ou récepteurs émetteurs, dans lequel un canal (K1) associé à des sections de liaison (V1-V3) situées entre une unité (1) active en tant que première source de données et une unité (4) active en tant que premier collecteur de données, est associé à d'autres sections de liaison qui ne sont pas encore reliées à ce canal, pour pouvoir utiliser un canal (K) plusieurs fois, **caractérisé en ce que** les sections de liaison différentes (V6, V7, V8) disposées entre une unité (6) active en tant que seconde source de données et une unité (9) active en tant que second collecteur de données associé, sont simultanément reliées au même canal (K1).

2. Procédé selon la revendication 1, **caractérisé en ce que** ledit réseau est un dénommé réseau MOST.

3. Procédé selon la revendication 1 ou 2, **caractérisé en ce que** la transmission de données ne se produit que dans une direction, soit dans le sens des aiguilles d'une montre soit dans le sens inverse aux aiguilles d'une montre.
